# EUROPEAN PATENT APPLICATION

(11) **EP 4 529 173 A1**
(43) Date of publication of application: **26.03.2025**
(21) Application number: 22950107.7
(22) Date of filing: 23.12.2022
(51) Int. Cl.: H04N 19/61, H04N 21/2343

(54) **ENCODING METHOD, DECODING METHOD, APPARATUS, AND SYSTEM**

(30) Priority: 05.07.2022 CN 202210784369
(71) Applicant: Huawei Technologies Co., Ltd., Shenzhen, Guangdong 518129 (CN)
(72) Inventor: ZHANG, Yixuan, Shenzhen, Guangdong 518129 (CN); CHEN, Shaolin, Shenzhen, Guangdong 518129 (CN); SONG, Yi, Shenzhen, Guangdong 518129 (CN); DI, Peiyun, Shenzhen, Guangdong 518129 (CN)
(74) Representative: Pfenning, Meinig & Partner mbB
(86) International application number: PCT/CN2022/141662
(87) International publication number: WO 2024/007550

(57) **Abstract**

Disclosed are an encoding/decoding method, apparatus, and system. The encoding method includes: encoding video information, where the video information includes M frames, the M frames include a first frame, a second frame, and a third frame, the second frame refers to the first frame, and the third frame refers to the second frame or the first frame; storing the first frame, the second frame, and the third frame in a buffer to obtain candidates of a plurality of long-term reference frames; and selecting a subset from the candidates of the plurality of long-term reference frames based on a feedback signal as a long-term reference frame for use. In this application, coding efficiency and reconstructed image quality can be improved when there is a feedback delay or feedback information is inconsistent during long-range transmission, and image quality can be recovered at low costs when a frame loss occurs during transmission.

## Description

This application claims priority to Chinese Patent Application No. 202210784369.0, filed with the China National Intellectual Property Administration on July 5, 2022 and entitled "ENCODING/DECODING METHOD, APPARATUS, AND SYSTEM", which is incorporated herein by reference in its entirety.

### TECHNICAL FIELD

This application relates to the multimedia field, and in particular, to an encoding/decoding method, apparatus, and system.

### BACKGROUND

With the popularization of mobile terminal devices and the improvement of computing capabilities of the mobile terminal devices, a projection image transmission technology becomes increasingly important in applications in some important scenarios. For example, in an office scenario, the projection image transmission technology is applied to facilitate information sharing, and in a home entertainment scenario, the projection image transmission technology is applied to improve user experience of projection between a small screen and a large screen.

Projection image transmission refers to a complete set of technologies in which video data generated by a mobile terminal device with a strong processing capability is encoded and compressed, and encoded and compressed video data is sent to a device with a weak processing capability but good display effect over a wireless or wired network for display. The video data includes a game image rendered by a GPU, and the like. The device with the weak processing capability but good display effect includes a TV, a VR helmet, and the like.

The projection image transmission technology can resolve problems of connection and information sharing between the mobile terminal device and another device. Currently, applications of the projection image transmission technology have entered an actual use phase, for example, cloud gaming, remote desktop office, smart classroom, and broadcast projection. However, the existing projection image transmission technology has problems of a long delay, uncontrollable image quality, and frequent frame freezing, which significantly affects user experience.

Therefore, based on current commonly-used network settings, research on a low-delay anti-interference projection image transmission method greatly improves current user projection experience, and is of strategic significance to improving product competitiveness and enhancing user stickiness to a device.

The applications, for example, cloud gaming, remote desktop office, smart classroom, and broadcast projection, have an interaction feature, and therefore require a system delay as low as possible. In addition, because an unstable channel bandwidth may cause a data loss, resulting in an image quality problem, anti-interference is also an important requirement for the applications of the projection image transmission technology.

For applications of long-range projection image transmission and one-to-many projection image transmission mentioned above, a method is required to improve coding efficiency and reconstructed image quality when there is a feedback delay or feedback information is inconsistent during long-range transmission, and image quality can be recovered at low costs when a frame loss occurs during transmission.

### SUMMARY

To resolve the foregoing problem, embodiments of this application provide a decoding method, apparatus, and system.

According to a first aspect, an embodiment of this application provides a video encoding/decoding method for projection image transmission. The method includes: encoding video information, where the video information includes M frames, the M frames include a first frame, a second frame, and a third frame, the second frame refers to the first frame, and the third frame refers to the second frame or the first frame; storing the first frame, the second frame, and the third frame in a buffer to obtain candidates of a plurality of long-term reference frames; and selecting a subset from the candidates of the plurality of long-term reference frames as a long-term reference frame for use. In this way, a reference frame of image that can be stored for a long time is managed and used, and coding efficiency and reconstructed image quality can be improved in an application scenario in which channel feedback validity and timeliness cannot be ensured. In addition, a correct image can be quickly recovered, through inter coding, at a low bit rate when a feedback delay or failure occurs. The feedback delay includes a case in which a long time is required to receive a feedback signal during long-range image transmission, or a case in which feedback signals cannot be used in a timely manner due to inconsistency of the feedback signals during one-to-many short-range projection image transmission.

In an implementable implementation, the determining to select a subset from the candidates of the plurality of long-term reference frames as a long-term reference frame for use includes: determining, based on a feedback signal, to select one or a combination of the first frame, the second frame, and the third frame from the candidates of the plurality of long-term reference frames as the long-term reference frame for use, where the feedback signal is a signal indicating whether a receiver successfully performs receiving. In this way, the long-term reference frame may be selected from the candidates of the long-term reference frames, and the correct image is quickly recovered, through inter coding, at the low bit rate when the feedback delay or failure occurs, thereby meeting a continuity requirement of transmission quality and recovering the correct image at the low bit rate.

In an implementable implementation, for layered encoding on the video information, the determining to select a subset from the candidates of the plurality of long-term reference frames as a long-term reference frame for use includes: selecting a layer from the long-term reference frames as the long-term reference frame for use. In this way, a higher-quality layer may be selected from the long-term reference frames for use, and a higher-quality image is obtained at a lower bit rate, to meet a transmission quality requirement.

In an implementable implementation, each of the M frames includes a basic layer and an enhancement layer, and encoding at the basic layer in each frame refers to an enhancement layer in the long-term reference frame. Therefore, inter coding may be used, and the enhancement layer in the long-term reference frame is used as a reference, so that coding efficiency and reconstructed image quality of the basic layer are improved, and further coding efficiency and reconstructed image quality of the enhancement layer are also improved.

In an implementable implementation, each of the M frames includes the basic layer and the enhancement layer, and encoding at the enhancement layer in each frame refers to a lower layer in the same frame and a same layer in a previous frame. In this way, layered encoding may be performed on the video information in an intra coding reference manner.

In an implementable implementation, the method further includes: adding a first mark to the video information, where the first mark indicates frame information and/or layer information of the candidates of the plurality of long-term reference frames. In this way, the frame information and/or the layer information of the long-term reference frames may be shared to the receiver, so that during projection image transmission, the reference frame in the encoding process and a reference frame in a decoding process can always be consistent, and the correct image can be recovered at the low bit rate.

In an implementable implementation, the method further includes: adding a second mark to the video information, where the second mark indicates frame information and/or layer information of the long-term reference frame.

In an implementable implementation, a frame delay of the feedback signal is at least M frames. In this way, obtaining the feedback delay includes a case in which a long time (the M frames) is required to receive the feedback signal during long-range image transmission. It is assumed that a quantity of layers in one frame is L, and a delay from transmitting the frame to obtaining a feedback signal is the M frames. In this case, a quantity of candidate buffers of the long-term reference frame is less than M*L, that is, only a part of encoded image layers can be used as candidate images of the long-term reference frame.

In an implementable implementation, the feedback signal includes candidate information of a long-term reference frame that is successfully received; and the method includes: determining/updating the long-term reference frame based on the candidate information of the long-term reference frame that is successfully received. In this way, during projection image transmission, the reference frame in the encoding process at a transmitter and the reference frame in the decoding process at the receiver can always be consistent, so that the correct image can be recovered at the low bit rate.

In an implementable implementation, there are a plurality of feedback signals; and the method further includes: determining, based on candidate information that is of long-term reference frames that are successfully received and that is in the plurality of feedback signals, candidate information of long-term reference frames that are successfully received on a plurality of channels; and determining/updating the long-term reference frame based on the candidate information of the long-term reference frames that are successfully received on the plurality of channels. In this way, for one-to-many short-range wireless projection, an image received by receivers of most users is used as a valid long-term reference frame, so that coding efficiency and reconstructed image quality of the basic layer can be improved.

In an implementable implementation, a latest determined long-term reference frame is used based on the feedback signal. Therefore, during image troubleshooting, inter coding may be performed based on the latest determined long-term reference frame, to reduce a bit rate and recover the correct image at the lower bit rate.

In an implementable implementation, the method further includes: determining, according to a pre-agreed rule, to determine to select the subset from the candidates of the plurality of long-term reference frames as the long-term reference frame for use. In this way, the reference frame in the encoding process and the reference frame in the decoding process at the receiver can always be consistent according to the pre-agreed rule, so that the correct image can be recovered at the low bit rate.

In an implementable implementation, the storing the first frame, the second frame, and the third frame in a buffer to obtain candidates of a plurality of long-term reference frames includes: storing frame quantities of the first frame, the second frame, and the third frame and location information of the frames in the buffer, where the location information includes frame information and/or layer information of the first frame, the second frame, and the third frame. In this way, information of the candidates of the plurality of long-term reference frames can be quickly obtained from the buffer, so that the correct image can be recovered at the low bit rate.

According to a second aspect, an embodiment of this application provides a video encoding/decoding method for projection image transmission. The method includes: decoding video information, where the video information includes M frames, the M frames include a first frame, a second frame, and a third frame, the second frame refers to the first frame, and the third frame refers to the second frame or the first frame; storing the first frame, the second frame, and the third frame in a buffer to obtain candidates of a plurality of long-term reference frames; and selecting a subset from the candidates of the plurality of long-term reference frames as a long-term reference frame for use. Beneficial effect of the second aspect is the same as that in the first aspect, and details are not described herein again.

In an implementable implementation, the determining to select a subset from the candidates of the plurality of long-term reference frames as a long-term reference frame for use includes: determining to select one or a combination of the first frame, the second frame, and the third frame from the candidates of the plurality of long-term reference frames as the long-term reference frame for use.

In an implementable implementation, for layered decoding on the video information, the determining to select a subset from the candidates of the plurality of long-term reference frames as a long-term reference frame for use includes: selecting any layer from the long-term reference frames for use.

In an implementable implementation, each of the M frames includes a basic layer and an enhancement layer, and decoding at the basic layer in each frame refers to an enhancement layer in the long-term reference frame.

In an implementable implementation, each of the M frames includes the basic layer and the enhancement layer, and decoding at the enhancement layer in each frame refers to a lower layer in the same frame and a same layer in a previous frame.

In an implementable implementation, the method further includes: obtaining a first mark in the video information, and obtaining frame information and/or layer information of the candidates of the plurality of long-term reference frames based on the first mark in the video information, where the frame information and/or the layer information of the candidates of the plurality of long-term reference frames include/includes frame information and/or layer information of the first frame, the second frame, and the third frame; and obtaining the long-term reference frame from a video bitstream based on the frame information and/or the layer information of the candidates of the plurality of long-term reference frames.

In an implementable implementation, the method further includes: obtaining a second mark in the video information, and obtaining frame information and/or layer information of the long-term reference frame based on the second mark in the video information; and obtaining the long-term reference frame from the candidates of the plurality of long-term reference frames based on the frame information and/or the layer information of the long-term reference frame.

In an implementable implementation, the method further includes: obtaining candidate information of a long-term reference frame that is successfully received in the video information; and determining/updating the long-term reference frame based on the candidate information of the long-term reference frame that is successfully received.

In an implementable implementation, the method further includes: sending a feedback signal, where the feedback signal is a signal indicating that a receiver performs successfully receiving, and the feedback signal includes the frame information and/or the layer information of the candidates of the plurality of long-term reference frames.

In an implementable implementation, the method further includes: sending a feedback signal, where the feedback signal is a signal indicating that a receiver performs successfully receiving, and the feedback signal includes the frame information and/or the layer information of the long-term reference frame.

In an implementable implementation, the method further includes: performing decoding by using a latest determined long-term reference frame; and sending a feedback signal, where the feedback signal is a signal indicating that a receiver fails to perform receiving, or a signal indicating that a candidate of a non-long-term reference frame is received.

In an implementable implementation, the method further includes: determining, according to a pre-agreed rule, to determine to select the subset from the candidates of the plurality of long-term reference frames as the long-term reference frame for use.

In an implementable implementation, the storing the first frame, the second frame, and the third frame in a buffer to obtain candidates of a plurality of long-term reference frames includes: storing frame quantities of the first frame, the second frame, and the third frame and location information of the frames in the buffer, where the location information includes frame information and layer information of the first frame, the second frame, and the third frame.

According to a third aspect, an embodiment of this application provides a video encoding apparatus, configured to implement the method according to the first aspect. The apparatus includes: an encoding module, configured to encode video information, where the video information includes M frames, the M frames include a first frame, a second frame, and a third frame, the second frame refers to the first frame, and the third frame refers to the second frame or the first frame; a buffer module, configured to store the first frame, the second frame, and the third frame in a buffer to obtain candidates of a plurality of long-term reference frames; and a long-term reference frame determining module, configured to select a subset from the candidates of the plurality of long-term reference frames based on a feedback signal as a long-term reference frame for use.

According to a fourth aspect, an embodiment of this application provides a video decoding apparatus, configured to implement the method according to the second aspect. The apparatus includes: a decoding module, configured to decode video information, where the video information includes M frames, the M frames include a first frame, a second frame, and a third frame, the second frame refers to the first frame, and the third frame refers to the second frame or the first frame; a buffer module, configured to store the first frame, the second frame, and the third frame in a buffer to obtain candidates of a plurality of long-term reference frames; and a long-term reference frame determining module, configured to select, a subset from the candidates of the plurality of long-term reference frames based on a feedback signal as a long-term reference frame for use.

According to a fifth aspect, an embodiment of this application provides a video encoding/decoding system, including the video encoding apparatus according to the third aspect and the video decoding apparatus according to the fourth aspect.

### BRIEF DESCRIPTION OF DRAWINGS

To describe technical solutions of a plurality of embodiments disclosed in the specification more clearly, the following briefly describes the accompanying drawings used in describing embodiments. It is clear that the accompanying drawings in the following descriptions show merely the plurality of embodiments disclosed in the specification, and a person of ordinary skill in the art can still derive other drawings from these accompanying drawings without creative efforts.

The following briefly describes the accompanying drawings used in descriptions of embodiments or the conventional technology.
FIG. 1 is a diagram of a scalable encoding/decoding technology according to Solution 1;
FIG. 2 is a diagram of a layered encoding/decoding technology based on an optimal reference frame according to Solution 2;
FIG. 3a is a diagram of an architecture of an encoding apparatus of a transmitter device in a method according to an embodiment of this application;
FIG. 3b is a diagram of an architecture of a decoding apparatus of a receiver device in a method according to an embodiment of this application;
FIG. 3c is a framework diagram of a video encoding/decoding system for projection image transmission according to an embodiment of this application;
FIG. 4 is a diagram of an application of a video encoding/decoding method for projection image transmission in a long-range projection scenario according to Embodiment 1 of this application;
FIG. 5 is a diagram of an application of a video encoding/decoding method for projection image transmission in a one-to-many short-range wireless projection scenario according to Embodiment 2 of this application; and
FIG. 6 is a diagram of a video encoding/decoding method for projection image transmission applied to a receiver decoding scenario according to Embodiment 3 of this application.

### DESCRIPTION OF EMBODIMENTS

To make objectives, technical solutions, and advantages of embodiments of this application clearer, the following describes the technical solutions in embodiments of this application with reference to accompanying drawings.

In the description of embodiments of this application, words such as "example", "for example", or "an example" are used to represent an example, an illustration, or a description. Any embodiment or design solution described as "example", "for example", or "an example" in embodiments of this application should not be interpreted as being more preferred or advantageous than another embodiment or design solution. Specifically, use of words such as "example", "for example", or "an example" is intended to present related concepts in a specific manner.

In descriptions of embodiments of this application, the term "and/or" is merely an association relationship for describing associated objects, and indicates that three relationships may exist. For example, A and/or B may indicate: only A exists, only B exists, and both A and B exist. In addition, unless otherwise stated, a term "a plurality of" means two or more than two. For example, a plurality of systems means at least two systems, and a plurality of terminals means at least two terminals.

In addition, the terms "first" and "second" are merely used for a description purpose, and shall not be understood as indicating or implying relative importance or implicitly including indicated technical features. Therefore, a feature limited by "first" or "second" may explicitly or implicitly include one or more features. The terms "include", "have", and their variants all mean "include but are not limited to", unless otherwise specifically emphasized in another manner.

Descriptions of embodiments of this application relate to "some embodiments" that describe subsets of all possible embodiments, but it may be understood that "some embodiments" may be same or different subsets of all the possible embodiments and may be combined with each other without conflict.

In descriptions of embodiments of this application, the terms "first\second\third, and the like", or a module A, a module B, a module C, and the like are merely used to distinguish between similar objects, and do not represent a specific order of objects. It may be understood that specific orders or sequences may be interchanged when allowed, so that embodiments of this application described herein can be implemented in an order other than those shown or described herein.

In descriptions of embodiments of this application, involved reference numerals such as S110 and S120 that indicate steps do not necessarily indicate that the steps are to be performed based on the order, and consecutive steps may be exchanged if permitted, or may be performed at the same time.

Unless otherwise defined, all technical and scientific terms used in this specification have same meanings as those usually understood by a person skilled in the art of this application. The terms used in this specification are merely intended to describe embodiments of this application, and are not intended to limit this application.

To achieve the purpose of anti-interference, a layered decoding method may be used. To be specific, a frame of image is encoded into a plurality of pieces of video information with different bit rates and different quality. When a channel bandwidth is high, a decoder receives more video information, and a reconstructed image has higher quality.

Because a transmission result of a channel may be fed back to an encoder, when the feedback is performed in a timely manner, the encoder may dynamically adjust a reference frame used in the latter frame based on a fed back receiving status of the former frame, to ensure that a reference frame used in each frame is a valid and best-quality frame, thereby achieving best coding efficiency and best reconstructed image quality.

However, in a technology application for long-range projection image transmission, because there is a long transmission range and a network node between a transmitter device and a receiver device, a feedback signal indicating a receiving status of the video information is delayed. Consequently, a reference frame used in the latter frame cannot be adjusted. In another case, when a transmitter sends a signal to a plurality of receivers, for example, in a smart classroom application, a video of an experiment performed by a teacher on a podium is transmitted to a plurality of students in a classroom at the same time, and signals fed back by the receivers are inconsistent. Consequently, a reference frame is also difficult be adjusted by an encoder in a timely manner. If the reference frame cannot be adjusted in a timely manner, coding efficiency and reconstructed image quality are reduced. In addition, when a frame loss occurs, image quality is recovered only through intra coding at high costs.

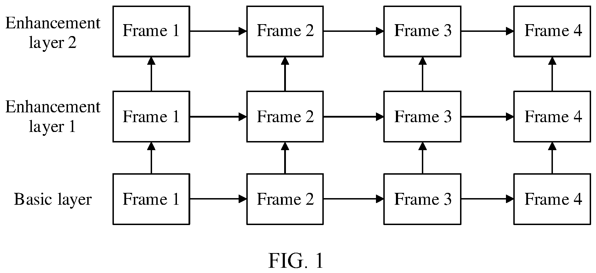

FIG. 1 is a diagram of a scalable video coding/scalable high-efficiency video coding (scalable video coding/scalable high-efficiency video coding, SVC/SHVC) technology according to Solution 1. The SVC/SHVC technology is used to encode a source video into multi-layer images with different quality or resolution, and the multi-layer images have reference relationships. During decoding, a higher-quality or larger-resolution layer refers to and only refers to a same layer and a lower-quality/smaller-resolution layer.

As shown in FIG. 1, the SVC/SHVC technology is used to encode a source video into an image at a basic layer, an image at an enhancement layer 1, and an image at an enhancement layer 2 that have reference relationships. An arrow in the figure points to a high-layer encoded image in a same frame or a same-layer encoded image in a next frame. It can be learned that, in a same frame, quality/resolution of an image at a basic layer<quality/resolution of an image at an enhancement layer 1<quality/resolution of an image at an enhancement layer 2.

In some embodiments, encoding at the basic layer is performed by using a previous frame of image at a same layer as a reference, and encoding at the enhancement layer is performed by using an image at a lower layer in a same frame and a previous frame of image at a same layer as references.

For example, quality/resolution of an image at a basic layer in a frame 1 is lowest, encoding at an enhancement layer 1 in the frame 1 is performed by using the image at the basic layer in the frame 1 as a reference, and encoding at an enhancement layer 2 in the frame 1 is performed by using the image at the enhancement layer 1 in the frame 1 as a reference.

For example, encoding at a basic layer in a frame 2 is performed by using the image at the basic layer in the frame 1 as a reference, encoding at an enhancement layer 1 in the frame 2 is performed by using the image at the basic layer in the frame 2 and the image at the enhancement layer 1 in the frame 1 as references, and encoding at an enhancement layer 2 in the frame 2 is performed by using the image at the enhancement layer 1 in the frame 2 and the image at the enhancement layer 2 in the frame 1 as references.

During image transmission, transmission is sequentially performed from the lower-quality/smaller-resolution layer to the higher-quality/larger-resolution layer. A larger quantity of layers received by a decoder indicates better reconstructed image quality.

A fixed reference relationship is used during standard layered encoding/decoding of the SVC/SHVC technology, and feedback information of a channel is not used for adjustment, thereby reducing dependence on the channel. In addition, because an image at a high-quality layer is more likely to be lost, the standard stipulates that a low-quality layer cannot refer to the high-quality layer. However, in this way, each frame of image cannot refer to a best-quality image, thereby reducing coding efficiency and reconstructed image quality. In addition, because the reference relationship is fixed, once an image is lost during transmission, an original reference relationship cannot be maintained, resulting in encoding/decoding inconsistency. Only intra coding is performed again to recover encoding/decoding consistency and correctness of a reconstructed image.

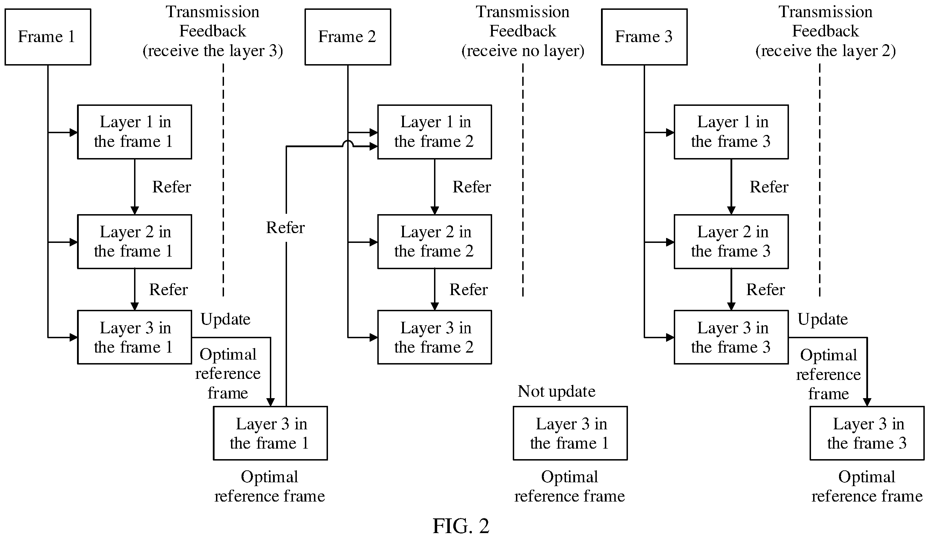

FIG. 2 is a diagram of a layered encoding/decoding technology based on an optimal reference frame according to Solution 2. As shown in FIG. 2, same as Solution 1, in this solution, a frame of image is divided into a plurality of quality layers for encoding. A difference lies in that, in Solution 2, before each frame is encoded, a receiving status of each quality layer in the former frame needs to be fed back through a channel in a timely manner. In this way, before encoding each frame, an encoder updates image content that is of a highest-quality layer and that is successfully received in the former frame to separate storage space, that is, an optimal reference frame. A basic layer (layer 1) in the latter frame only needs to refer to the optimal reference frame. In this way, an image referred by each basic layer is valid and has optimal quality, thereby improving coding efficiency and reconstructed image quality.

For example, before a second frame is encoded, feedback on receiving statuses of all quality layers in a first frame is received, and successfully received content of an image at a highest-quality layer, such as an image at a third layer in the first frame, is updated to separate storage space, that is, an optimal reference frame. When encoding the second frame, an encoder may refer to the image at the third layer in the first frame in the optimal reference frame. In this way, when encoding at each basic layer in the second frame is performed, a referred image is valid and has optimal quality, thereby improving coding efficiency and reconstructed image quality of the second frame.

Solution 2 highly depends on timely feedback on the image receiving status through the channel, and the timely feedback is feedback within one frame. Once a feedback delay occurs, that is, no feedback is received before a next frame is encoded, or in a case of a plurality of receivers, receiving statuses fed back by the receivers are inconsistent, the optimal reference frame solution cannot be implemented.

For example, before a third frame is encoded, no feedback on receiving statuses of all quality layers in the second frame is received through the channel, and content in the optimal reference frame is not updated. In this case, the optimal reference frame solution cannot be implemented.

As described above, a conventional technology for projection image transmission is mainly limited by high dependence on validity and timeliness of channel feedback. However, in an application scenario in which validity and timeliness of channel feedback cannot be ensured, for example, long-range image transmission and one-to-many image transmission, the conventional technology encounters a problem that coding efficiency and reconstructed image quality are reduced, and costs of image correctness recovery are high.

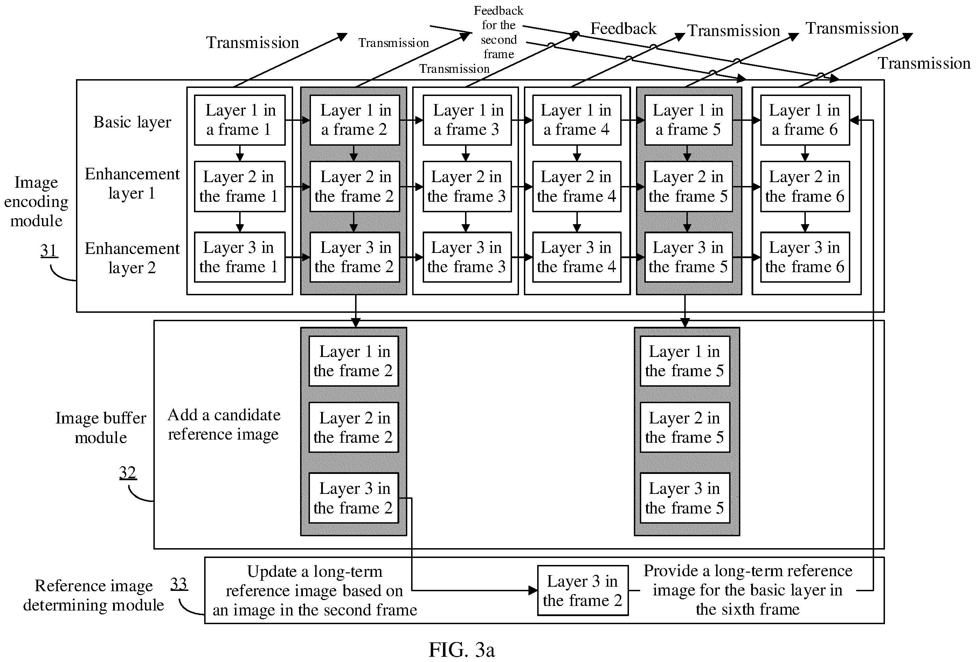

FIG. 3a is a diagram of an architecture of an encoding apparatus according to an embodiment of this application. As shown in FIG. 3a, a layered encoding architecture in an encoding apparatus of a transmitter device includes an image encoding module 31, an image buffer module 32, and a reference image determining module 33.

The image encoding module 31 encodes video information, where the video information includes M frames, the M frames include a first frame, a second frame, and a third frame, the second frame refers to the first frame, and the third frame refers to the second frame or the first frame. The image buffer module 32 stores the first frame, the second frame, and the third frame in a buffer to obtain candidates of a plurality of long-term reference frames. The reference image determining module 33 selects a subset from the candidates of the plurality of long-term reference frames as a long-term reference frame for use.

In some embodiments, a frame quantity N of the candidates of the long-term reference frames may be a set quantity, or may be determined based on a specified quantity of buffers.

In some embodiments, the image buffer module 32 includes N candidate buffers. If a quantity of layers of one frame of image is set to L, and a delay of sending the frame of image to obtaining a feedback signal is at least M frames, where N<M*L.

As shown in FIG. 3a, the image buffer module 32 includes two buffers, and the image buffer module 32 specifies, from reconstructed images at three layers in each frame in six consecutive frames that have undergone intra layered encoding, a total of six inconsecutive reconstructed images in a second frame and a fifth frame, and stores the six inconsecutive reconstructed images in the buffers.

It may be understood that, only a part of encoded image layers may be used as the candidates of the long-term reference frames. Because there is a long transmission range and a network node between the transmitter device and a receiver device, and a feedback signal received by the transmitter device has a delay of five frames, only a part of encoded image layers in the second frame to the fifth frame in images of the image encoding module 31 may be used as the candidates of the long-term reference frames.

In some embodiments, the candidates of the N long-term reference frames and location information of the N long-term reference frames in the buffer may be updated, to meet a continuity requirement of transmission quality. In this way, resources occupied for storing the candidates of the long-term reference frames can be reduced.

In some embodiments, the long-term reference frame in the buffer is updated based on the feedback signal. In this way, resources occupied for storing the long-term reference frame can be reduced.

In some embodiments, when the feedback signal includes candidate location information of a long-term reference frame that is successfully received, a candidate of a long-term reference frame is determined from the candidates of the plurality of long-term reference frames based on the candidate location information of the long-term reference frame that is successfully received as a long-term reference frame.

As shown in FIG. 3a, before a sixth frame is encoded, an encoder receives a feedback signal that is sent by a receiver and that indicates that the second frame is successfully received, determines, based on the feedback signal, that a third layer in the second frame is a long-term reference frame, and performs additional inter coding on a basic layer in the sixth frame.

To maintain encoding/decoding consistency, the reference image determining module 33 may determine/update the long-term reference frame based on information that is of the long-term reference frame and that is indicated by the feedback signal.

For example, the reference image determining module 33 may provide a long-term reference frame for a basic layer in each frame as a long-term reference for inter coding during layered encoding with the feedback signal. The long-term reference frame is in a unit of slice (slice). An image of each slice includes any layer of a slice (slice) at a corresponding location in a same frame or a different frame.

In some embodiments, the reference image determining module 33 determines, based on indication information of the feedback signal, a candidate of a long-term reference frame from the N candidate buffers as a long-term reference frame. The image encoding module 31 performs additional inter coding on a current original image by using the long-term reference frame as a reference to obtain video information, and marks location information of the long-term reference frame in the video information.

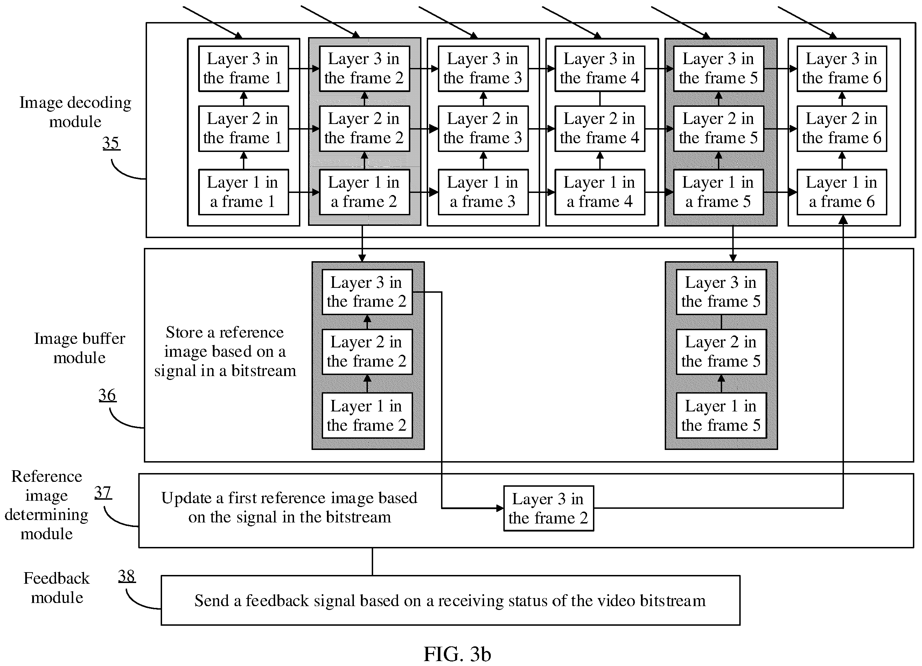

FIG. 3b is a diagram of an architecture of a decoding apparatus of a receiver device in a method according to an embodiment of this application. As shown in FIG. 3b, the decoding apparatus of the receiver device includes an image decoding module 35, an image buffer module 36, a reference image determining module 37, and a feedback module 38.

The image decoding module 35 decodes video information, where the video information includes M frames, the M frames include a first frame, a second frame, and a third frame, the second frame refers to the first frame, and the third frame refers to the second frame. The image buffer module 36 is configured to store one or a combination of the first frame, the second frame, and the third frame in a buffer to obtain candidates of a plurality of long-term reference frames. The long-term reference frame determining module 37 is configured to select a subset from the candidates of the plurality of long-term reference frames as a long-term reference frame for use. The feedback module 38 is configured to send a feedback signal, including a feedback signal indicating that receiving is successfully performed and/or a feedback signal indicating that receiving fails to be performed.

In some embodiments, the buffer module 36 determines, based on information of the candidates of the plurality of long-term reference frames, information of N inconsecutive reconstructed images from M consecutive reconstructed images, and stores the N inconsecutive reconstructed images in a buffer to obtain candidates of N long-term reference frames, where the N inconsecutive reconstructed images may be one or a combination of the first frame, the second frame, and the third frame. N<M*L, and L is a quantity of layers in each frame, and the information of the N inconsecutive reconstructed images is determined from the M consecutive reconstructed images based on the information of the candidates of the plurality of long-term reference frames, and N inconsecutive reconstructed images are stored in the buffer to obtain the candidates of the N long-term reference frames, where N<M*L, and L is the quantity of layers in each frame.

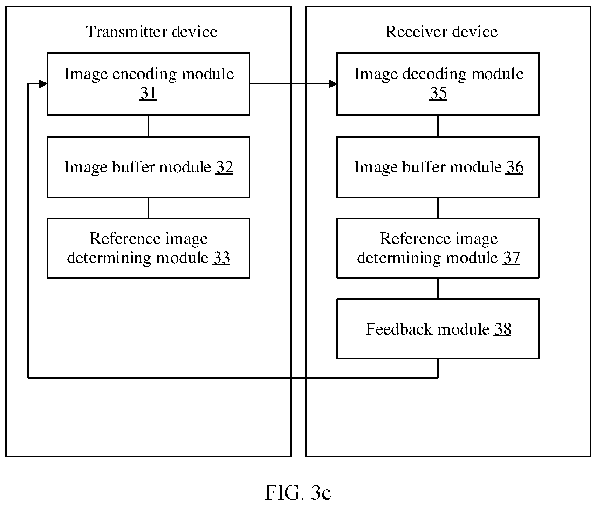

FIG. 3c is a diagram of an architecture of an encoding/decoding system according to an embodiment of this application. As shown in FIG. 3c, the video encoding apparatus and the video decoding apparatus are included. For specific content, refer to the content described in FIG. 3a and FIG. 3b. Details are not described herein again.

According to the video encoding/decoding system provided in this embodiment of this application, coding efficiency and reconstructed image quality can be improved in an application scenario in which channel feedback validity and timeliness cannot be ensured. In addition, a reference image that can be stored for a long time is managed and used when a feedback delay occurs, so that a correct image can be recovered at a low bit rate. The feedback delay includes a case in which a long time is required to receive a feedback signal during long-range image transmission, or a case in which feedback signals cannot be used in a timely manner due to inconsistency of the feedback signals during one-to-many short-range projection image transmission.

An embodiment of this application provides an encoding method, including: S101: Encode video information, where the video information includes M frames, the M frames include a first frame, a second frame, and a third frame, the second frame refers to the first frame, and the third frame refers to the second frame or the first frame; S102: Store the first frame, the second frame, and the third frame in a buffer to obtain candidates of a plurality of long-term reference frames; and S103: Select a subset from the candidates of the plurality of long-term reference frames as a long-term reference frame for use.

The following describes the foregoing steps S101 to S103 in detail.

S101: Video information is encoded. The video information includes M frames, the M frames include a first frame, a second frame, and a third frame, the second frame refers to the first frame, and the third frame refers to the second frame or the first frame.

In some embodiments, each of the M frames includes a basic layer and an enhancement layer, and encoding at the basic layer in each frame may refer to an enhancement layer in the first frame, the second frame, and/or the third frame. The first frame, the second frame, and the third frame may be any consecutive/inconsecutive frames in the M frames.

For example, when the video information is encoded, encoding at a basic layer in the second frame refers to an enhancement layer in the first frame, and encoding at a basic layer in the third frame also refers to the enhancement layer in the first frame. The second frame and the first frame are consecutive.

For another example, when the video information is encoded, encoding at a basic layer in the second frame refers to an enhancement layer in the first frame, and encoding at a basic layer in the third frame refers to an enhancement layer in the second frame. The second frame and the first frame may be inconsecutive, and there may be an interval of two or more frames. The third frame and the second frame may be consecutive.

Similarly, encoding at a basic layer in a fourth frame refers to an enhancement layer in the third frame. The fourth frame and the third frame may be inconsecutive, and there is an interval of two or more frames. The rest may be deduced by analogy.

In some embodiments, each of the M frames includes a basic layer and a plurality of enhancement layers, and encoding at the basic layer in each frame may refer to any one of a plurality of enhancement layers in the first frame, the second frame, and/or the third frame. The first frame, the second frame, and the third frame may be any consecutive/inconsecutive frames in the M frames.

In some embodiments, layers in each of the M frames include the basic layer and the enhancement layer, and encoding at the enhancement layer in each frame refers to a lower layer in the same frame and a same layer in a previous frame.

For example, the video information may be encoded, by using an SVC/SHVC technology, into multi-layer images with different quality or resolution, and the multi-layer images have reference relationships. During encoding, a higher-quality or larger-resolution image layer refers to and only refers to a previous frame of image at a same layer or an image at a lower layer in a frame same as a current image layer.

Further, for example, the video information is encoded by using the SVC/SHVC technology. Encoding at a basic layer in the second frame can only refer to a basic layer in the first frame, and encoding at an enhancement layer in the second frame can refer to the basic layer in the second frame and/or an enhancement layer in the first frame. Encoding at a basic layer in the third frame can only refer to the basic layer in the second frame, and encoding at an enhancement layer in the third frame can refer to a basic layer in the third frame and/or the enhancement layer in the second frame. In this case, the first frame, the second frame, and the third frame are consecutive frames.

In some embodiments, during encoding of the video information, a reference frame may be used and updated based on layered encoding in standards such as the H.265 video encoding standard (high efficiency video coding, HEVC) and the H.264 video decoding standard (advanced video coding, AVC).

The foregoing coding according to the SVC/SHVC/HEVC reference relationship is referred to as intra coding (I-frame).

S102: The first frame, the second frame, and the third frame are stored in a buffer to obtain candidates of a plurality of long-term reference frames.

In some embodiments, the first frame, the second frame, and the third frame specified from the consecutive M frames that have undergone intra layered encoding may be stored in the buffer as the candidates of the plurality of long-term reference frames. The buffer herein may be denoted as a candidate buffer.

In some embodiments, the first frame, the second frame, and the third frame specified, according to a pre-agreed rule, from the consecutive M frames that have undergone intra layered encoding may be stored in the candidate buffer as the candidates of the plurality of long-term reference frames.

In some embodiments, the first frame, the second frame, and the third frame may be consecutive frames in the video information.

Because there is a long transmission range and a network node between a transmitter device and a receiver device, and a feedback signal received by the transmitter is delayed, when transmission quality and speed requirements are met, some inconsecutive frames may be buffered in an image of the video information as the candidates of the plurality of long-term reference frames.

In some embodiments, the first frame, the second frame, and the third frame may be inconsecutive frames in the video information.

In some embodiments, the first frame, the second frame, and the third frame specified, based on the feedback signal, from the consecutive M frames that have undergone intra layered encoding may be stored in the candidate buffer as the candidates of the plurality of long-term reference frames.

The feedback signal is a signal indicating whether the receiver successfully performs receiving, and is sent by the receiver based on whether the receiver successfully performs receiving. The feedback signal includes information, received by the receiver, of the candidates of the plurality of long-term reference frames.

Because there is the long transmission range and more network nodes between the transmitter and the receiver device, the feedback signal that can reflect a receiving status of the video information is delayed. A frame delay of the feedback signal may be a plurality of frames. In this case, only an encoded frame in the video information can be used as the candidate of the long-term reference frame.

In some embodiments, the frame delay of the feedback signal is at least the M frames, and the first frame, the second frame, and/or the third frame specified from the encoded consecutive M frames may be stored in the candidate buffer as the candidates of the plurality of long-term reference frames.

In some embodiments, the frame delay of the feedback signal is at least the M frames, and N inconsecutive reconstructed images specified from the encoded M consecutive frames may be stored in the candidate buffer as the candidates of the plurality of long-term reference frames. The N inconsecutive reconstructed images include reconstructed images in the first frame, the second frame, and/or the third frame. N<M*L, where L is a quantity of layers in each frame.

In some embodiments, frame quantities of the first frame, the second frame, and the third frame and location information of the frames are stored in the candidate buffer, where the location information includes frame information and/or layer information of the first frame, the second frame, and/or the third frame.

In some embodiments, a quantity N of candidate buffers may be set to store candidates of N long-term reference frames.

It may be understood that, in the encoding method provided in this embodiment of this application, the candidate of the long-term reference frame may be any layer in any specified frame, and frame information and layer information of a candidate in each long-term reference frame need to be written into the video information as location information, and are notified to a decoder at the receiver. The decoder at the receiver stores same quantities of reconstructed images at same locations as the long-term reference frames of the candidates during decoding.

In some embodiments, a first mark may be added to the video information, where the first mark indicates a quantity of candidates, frame information, and/or layer information of the plurality of long-term reference frames. The quantity of candidates of the plurality of long-term reference frames may be a set quantity, or may be determined based on a specified quantity of candidate buffers.

In some embodiments, the quantity of candidates of the plurality of long-term reference frames may be marked by using a first sequence parameter in the video information.

For example, during encoding, the receiver may add variable-length coding or fixed-length coding to a sequence parameter set sequence_parameter_set() to mark information about the quantity candidates of the long-term reference frames, and the variable-length coding or the fixed-length coding may be denoted as the first sequence parameter.

In some embodiments, a quantity of interval frames between candidates of each long-term reference frame in the candidates of the plurality of long-term reference frames may be marked by using a second sequence parameter in the video information.

For example, during encoding, the receiver may add a sequence level to a sequence parameter set sequence_parameter_set () to mark the quantity of interval frames between the candidates of each long-term reference frame, and the sequence level may be denoted as the second sequence parameter.

In some embodiments, the candidates of the long-term reference frames that are stored in the N candidate buffers and location information of the long-term reference frames are updated, to meet a continuity requirement of transmission quality. For example, after all the N candidate buffers are full, a candidate frame that has been used and has a long interval with a current long-term reference frame and location information of the candidate frame may be cleared, and content in this part of the candidate buffers is updated.

S103: A subset is selected from the candidates of the plurality of long-term reference frames as a long-term reference frame for use.

In some embodiments, the subset is selected from the candidates of the plurality of long-term reference frames according to a pre-agreed rule as the long-term reference frame for use. The subset includes one or a combination of the first frame, the second frame, and the third frame.

In some embodiments, one or a combination of the first frame, the second frame, and the third frame selected from the candidates of the plurality of long-term reference frames based on the feedback signal may be stored in the buffer as the long-term reference frame for use. The buffer herein may be denoted as a long-term buffer.

In some embodiments, the feedback signal includes information about whether an image at a layer of a slice of a frame is successfully received, and the image at the layer of the slice of the frame may be determined from the candidate buffer of the plurality of long-term reference frames as a long-term reference frame based on location information that is of a candidate of a long-term reference frame that is successfully received and that is in the feedback signal.

In some embodiments, a slice may be selected from the long-term reference frame based on the feedback signal for use. The long-term reference frame is in a unit of slice (slice). An image of each slice includes any layer of a slice (slice) at a corresponding location in a same frame or a different frame.

In some embodiments, any layer may be selected from the long-term reference frame based on the feedback signal for use, and encoding at a basic layer in each frame refers to this layer in the long-term reference frame.

For example, the long-term reference frame may be an enhancement layer in the first frame, encoding at a basic layer in the second frame refers to an enhancement layer in the first frame, encoding at a basic layer in the third frame also refer to the enhancement layer in the first frame, and the first frame, the second frame, and the third frame in the video information are any consecutive/inconsecutive frames in the M frames.

For example, the long-term reference frame may be an enhancement layer in the second frame, encoding at a basic layer in the third frame refers to the enhancement layer in the second frame, and encoding at a basic layer in the fourth frame also refers to the enhancement layer in the second frame. The third frame and the fourth frame are consecutive.

For example, each frame in the video information includes a basic layer and a plurality of enhancement layers, and any one of the plurality of enhancement layers in the long-term reference frame may be selected for use. Encoding at the basic layer in each frame refers to this layer in the long-term reference frame.

In some embodiments, a best-quality image layer may be selected from the long-term reference frame based on the feedback signal for use.

It should be understood that the long-term reference frame may be used as an inter coding reference (P-frame) for use, and is a reference added without changing the original SVC/SHVC/HEVC reference relationship. During layered encoding with the feedback signal, the long-term reference frame provides an additional inter coding reference for the basic layer in each frame.

In some embodiments, the feedback signal includes candidate information of a long-term reference frame that is successfully received; and the method includes: determining/updating the long-term reference frame based on the candidate information of the long-term reference frame that is successfully received.

For example, the feedback signal includes information indicating that the receiver successfully receives the second frame, and the second frame is the candidate of the long-term reference frame. A candidate buffer of the second frame is determined from the N candidate buffers based on location information that is in the information about the second frame and that is in the feedback signal, the second frame in the candidate buffer is stored in the long-term buffer, and the original long-term reference frame is deleted, to update the long-term reference frame.

In some embodiments, a latest determined long-term reference frame is used based on the feedback signal.

For example, the currently determined long-term reference frame may be stored in the long-term buffer. After a feedback signal received next time indicates that a received image is a candidate of a non-long-term reference frame, the long-term reference frame already stored in the long-term buffer is not updated, and the latest determined long-term reference frame is used as a reference.

For example, the currently determined long-term reference frame may be stored in the long-term buffer. After a feedback signal received next time indicates that receiving fails to be performed, the long-term reference frame already stored in the long-term buffer is not updated, and the latest determined long-term reference frame is used as a reference.

In some embodiments, there are a plurality of feedback signals; and the method includes: determining, based on candidate information that is of long-term reference frames that are successfully received and that is in the plurality of feedback signals, candidate information of long-term reference frames that are successfully received on a plurality of channels; and determining/updating the long-term reference frame based on the candidate information of the long-term reference frames that are successfully received on the plurality of channels.

In some embodiments, a second mark may be added to the video information, where the second mark indicates frame information and/or layer information of the long-term reference frame. Content of the second mark includes a sequence number of a frame and a sequence number of a layer from which each slice of the long-term reference frame comes.

For example, a quantity of slices of the referred long-term reference frame, and frame information and layer information of each slice may be marked in an image parameter set.

According to the encoding method provided in this embodiment of this application, coding efficiency and reconstructed image quality of the basic layer can be improved, and further coding efficiency and reconstructed image quality of the enhancement layer can also be improved. When a multi-frame feedback delay or asynchronization between a plurality of receivers occurs, the candidates of the plurality of long-term reference frames may be stored, and a closest image in the long-term reference frames is used as a reference for encoding, so that quality and consistency of video transmission at the plurality of receivers can be ensured.

Based on the foregoing encoding method, an embodiment of this application provides a decoding method, including the following steps S201 to S203.

S201: Video information is decoded. The video information includes M frames, the M frames include a first frame, a second frame, and a third frame, the second frame refers to the first frame, and the third frame refers to the second frame or the first frame.

In some embodiments, each of the M frames includes a basic layer and an enhancement layer, and decoding at the basic layer in each frame may refer to an enhancement layer in the first frame, the second frame, and/or the third frame. The first frame, the second frame, and the third frame may be any consecutive/inconsecutive frames in the M frames.

For example, when the video information is decoded, decoding at a basic layer in the second frame refers to an enhancement layer in the first frame, and decoding at a basic layer in the third frame also refers to the enhancement layer in the first frame. The second frame and the first frame are consecutive.

For another example, when the video information is decoded, decoding at a basic layer in the second frame refers to an enhancement layer in the first frame, and encoding at a basic layer in the third frame refers to an enhancement layer in the second frame. The second frame and the first frame may be inconsecutive, and there may be an interval of two or more frames. The third frame and the second frame may be consecutive.

Similarly, decoding at a basic layer in a fourth frame refers to an enhancement layer in the third frame. The fourth frame and the third frame may be inconsecutive, and there is an interval of two or more frames. The rest may be deduced by analogy.

In some embodiments, intra layered decoding is performed on the video information to obtain M frames of consecutive reconstructed images, where each frame in the M frames of reconstructed images includes a basic layer and an enhancement layer. Decoding at the basic layer in each frame refers to an enhancement layer in a long-term reference frame.

In some embodiments, each of the M frames include the basic layer and the enhancement layer, and decoding at the enhancement layer in each frame refers to a lower layer in the same frame and a same layer in a previous frame.

In some embodiments, the video information may be decoded according to the SVC/SHVC/HEVC reference relationship.

S202: The first frame, the second frame, and the third frame are stored in a buffer to obtain candidates of a plurality of long-term reference frames.

In some embodiments, frame information and/or layer information of the candidates of the plurality of long-term reference frames may be obtained based on a first mark in the video information. The frame information and/or the layer information of the candidates of the plurality of long-term reference frames include/includes information about the first frame, the second frame, and the third frame. The candidates of the plurality of long-term reference frames are obtained from a video bitstream based on the frame information and/or the layer information of the candidates of the plurality of long-term reference frames.

In some embodiments, a frame quantity of candidates of the plurality of long-term reference frames and location information of the frames may be stored in the candidate buffer, where the location information includes the frame information and/or the layer information of the candidates of the plurality of long-term reference frames.

S203: A subset is selected from the candidates of the plurality of long-term reference frames as a long-term reference frame for use, and the long-term reference frame is stored in a long-term buffer.

In some embodiments, one or a combination of the first frame, the second frame, and the third frame may be determined to be selected from the candidates of the plurality of long-term reference frames as the long-term reference frame for use.

In some embodiments, frame information and/or layer information of the long-term reference frame are/is obtained based on a second mark in the video information, and the long-term reference frame is obtained from the candidates of the plurality of long-term reference frames based on the frame information and/or the layer information of the long-term reference frame.

In some embodiments, when a receiver fails to receive the video information, or a received image is a signal of a candidate of a non-long-term reference frame, a latest determined long-term reference frame is used.

In some embodiments, the long-term reference frame is determined/updated based on candidate information of a long-term reference frame that is successfully received. The long-term reference frame is stored in the long-term buffer.

In some embodiments, any layer may be selected from the long-term reference frame for use.

In some embodiments, the subset is determined to be selected from the candidates of the plurality of long-term reference frames according to a pre-agreed rule as the long-term reference frame for use.

S204: A feedback signal is sent. The feedback signal is a signal indicating that the receiver currently successfully performs receiving or fails to perform receiving.

In some embodiments, the feedback signal is a signal indicating that the receiver performs successfully receiving, and the feedback signal includes the frame information and/or the layer information of the candidates of the plurality of long-term reference frames.

In some embodiments, the feedback signal is a signal indicating that the receiver fails to perform receiving, and the feedback signal includes the frame information and/or the layer information of the long-term reference frame.

### Embodiment 1

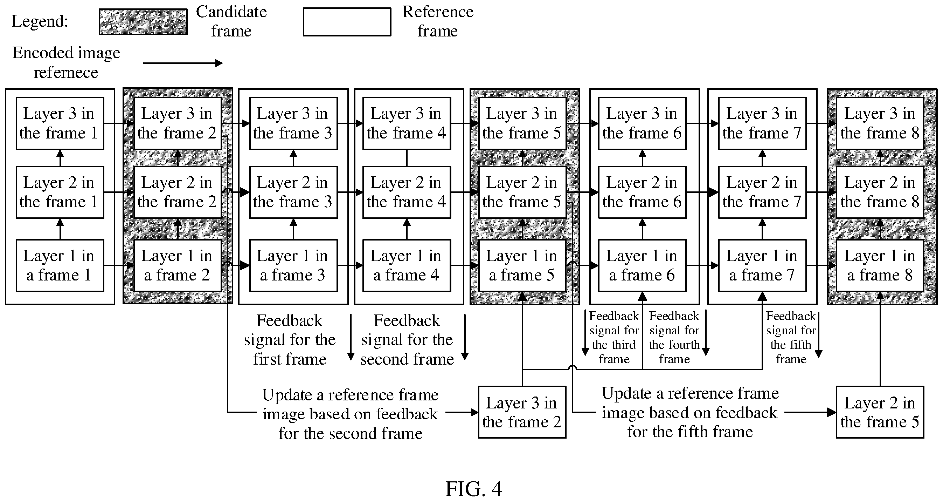

FIG. 4 is a diagram of an application of a video encoding method in a long-range projection scenario according to Embodiment 1 of this application. In the method provided in Embodiment 1 of this application, a reference frame may be used and updated based on layered encoding in standards such as the H.265 video decoding standard (high efficiency video coding, HEVC) and the H.264 video decoding standard (advanced video coding, AVC). As shown in FIG. 4, a transmission environment in this embodiment is as follows: There is a delay of three frames from transmitting a reconstructed image in a first frame to receiving a feedback signal for the first frame, that is, before an (N+3)^{th} frame is encoded, receiving information of each layer in an N^{th} frame may be obtained, where N is a non-zero natural number.

In Embodiment 1, each frame of image is divided into three layers, and a reference relationship of each frame of image during intra layered encoding is the same as that in the SVC standard method, and is fixed as follows: A basic layer refers to a basic layer in a previous frame, and an enhancement layer refers to both a lower layer in a same frame and a previous frame of image at a same layer. For example, a layer 1 is a basic layer, a layer 2 and a layer 3 are enhancement layers, and the layer 2 is a layer lower than the layer 3. In a first frame, an image at a layer 3 in the frame 1 is encoded with reference to an image at a layer 2 in the frame 1, and the image at the layer 2 in the frame 1 is encoded with reference to an image at a layer 1 in the frame 1. In a second frame, an image at a layer 3 in the frame 2 is encoded with reference to both an image at a layer 2 in the frame 2 and the image at the layer 3 in the frame 1, the image at the layer 2 in the frame 2 is encoded with reference to both an image at a layer 1 in the frame 2 and the image at the layer 2 in the frame 1, and the image at the layer 1 in the frame 2 is encoded with reference to the layer 1 in the frame 1. A reconstructed image in a subsequent frame may be deduced by analogy.

On this basis, in Embodiment 1 of this application, long-term reference frames are added for inter coding, and the following steps S301 to S310 are included.

S301: A candidate buffer is determined.

For example, when a transmission delay is nine image layers, a buffer may be reserved for three image layers, which are less than the nine image layers in the transmission delay, to save buffer costs.

S302: Candidates of the long-term reference frames that can be used for encoding are specified, and location information of the specified candidates of the long-term reference frames is written into video information.

For example, all layers in one frame may be selected at an equal interval of three frames as the candidates of the long-term reference frames. During encoding, reconstructed images, at an encoder/decoder side, of the candidates of the long-term reference frames are stored in the reserved candidate buffer.

S303: When the long-term reference frames are not determined, a common SVC encoding/decoding reference relationship is used.

For example, encoding on images in a first frame to a fourth frame in FIG. 4 may be used as an example.

It may be understood that, although a feedback signal for the first frame has been received before the fourth frame is encoded, because the first frame is not a candidate reference frame, a reconstructed image in the first frame is not stored and cannot be updated to the long-term reference frame, and the fourth frame still uses the SVC reference method.

S304: Before a fifth frame is encoded, a feedback signal for the second frame is received. In addition, because the second frame is a candidate reference frame, reconstructed images at all layers in the second frame have been stored in a long-term buffer. In this case, a received best-quality layer may be updated to a long-term reference frame in the long-term buffer based on an indication of the feedback signal.

For example, if the highest-quality layer received in the second frame is a second layer, the second layer in the second frame may be updated to the long-term reference frame.

S305: When encoding at a basic layer in the fifth frame is performed, the long-term reference frame is used as a first reference, and a basic layer in a previous frame is still used as a second reference.

Further, when the second layer in the second frame is used as the first reference and the basic layer in the first frame is used as the second reference, the second layer in the second frame is written into the video information as a signal of the long-term reference frame and is transmitted to a decoder.

S306: When a sixth frame is encoded, a feedback signal indicating that the third frame is successfully received is received. Because the third frame is not a candidate of a long-term reference frame, the long-term reference frame is not updated, and a basic layer in the sixth frame still uses the second layer in the second frame as a first reference.

S307: When a seventh frame is encoded, if no feedback signal indicating that a receiver successfully performs receiving is received, image troubleshooting is performed. When encoding is performed at a basic layer, only a closest long-term reference frame, that is, the second layer in the second frame, is used as a reference for inter coding, to reduce a bit rate and improve a transmission success rate.

S308: Before an eighth frame is encoded, a feedback signal indicating that an image in the fifth frame is successfully received is received. In addition, because the image in the fifth frame is a candidate of a long-term reference frame, reconstructed images at all layers in the fifth frame have been stored. In this case, a best-quality layer received by the receiver may be updated to the long-term reference frame in the long-term buffer as a long-term reference frame based on the feedback signal.

For example, before the eighth frame is encoded, if the feedback signal indicates that the highest-quality layer, received by the receiver, of the image in the fifth frame is the third layer, a reconstructed image at the third layer in the fifth frame is updated to the long-term reference frame in the long-term buffer.

S309: When encoding at a basic layer in the eighth frame is performed, a reconstructed image in the long-term reference frame is used as a first reference, and a basic layer in the seventh frame is used as a second reference.

For example, when encoding at the basic layer in the eighth frame is performed, the third layer in the fifth frame is used as a first reference, and the basic layer in the seventh frame is used as a second reference. In addition, the third layer in the fifth frame is used as the long-term reference frame, and location information of the third layer in the fifth frame is written into the video information and transmitted to the decoder at the receiver.

S310: A subsequent frame is encoded by analogy.

In the video encoding/decoding method for projection image transmission provided in Embodiment 1 of this application, in the long-range projection scenario, because the long-term reference frame comes from the higher-quality layer, coding efficiency and reconstructed image quality of the basic layer can be improved. During image troubleshooting, the bit rate may be reduced through inter coding in Embodiment 1 of this application, thereby improving the transmission success rate and reconstructed image quality.

### Embodiment 2

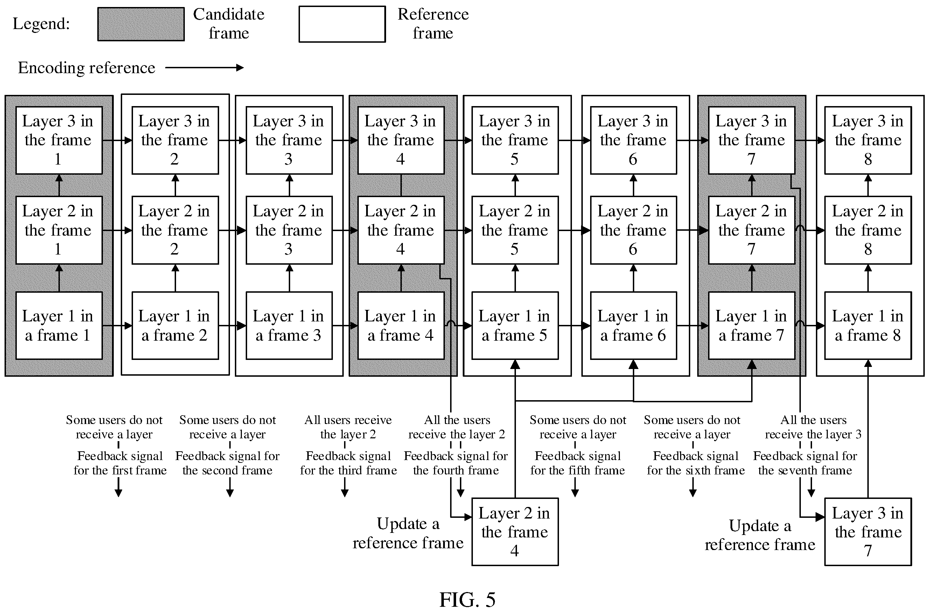

FIG. 5 is a diagram of an application of a video encoding method in a one-to-many short-range wireless projection scenario according to Embodiment 2 of this application. A reference image is used and updated based on layered encoding in standards such as HEVC and AVC.

A transmission environment in Embodiment 2 of this application is as follows: Data is transmitted to receivers of a plurality of users through short-range wireless channels (for example, Wi-Fi), and the receivers of all the users may feed back receiving statuses in a timely manner. However, the receiving statuses of the users may be different. Therefore, only images received by receivers of all or most of the users can be used as valid long-term reference frames.

In Embodiment 2, each frame of image is divided into three layers, and a reference relationship of each frame of image is the same as that in the SVC standard method, and is fixed as follows: A basic layer (layer 1) refers to a basic layer in a previous frame, and an enhancement layer (layer 2 and layer 3) refers to both a lower layer in a same frame and a previous frame of image at a same layer. On this basis, in this embodiment of this application, a long-term reference frame is added. An implementation solution is shown in FIG. 5.

S401: A candidate buffer is reserved. In this example, a buffer is reserved for three image layers, which are less than the nine image layers in a transmission delay, to save buffer costs.

S402: Candidates of a plurality of long-term reference frames that can be used for encoding are specified, and location information of the specified candidates of the plurality of long-term reference frames is written into video information.

For example, all layers in one frame are selected at an equal interval of three frames as the candidates of the long-term reference frames. During encoding, reconstructed images, at an encoder/decoder side, of the candidates of the long-term reference frames are stored in the reserved candidate buffer.

S403: When there is no data in a long-term reference frame in a long-term buffer, a common SVC encoding/decoding reference relationship is used, for example, a first frame to a fourth frame in FIG. 5. Herein, although a feedback signal for a previous frame is received during encoding of each frame before the third frame, because receivers of some users do not receive any previous layer of image, to consider this situation of these users, the image is not updated to the long-term reference frame in the long-term buffer. An encoder at a transmitter still uses the SVC reference relationship during encoding of images in the first frame to the third frame, and uses a previous frame of image at a same layer of an image in a current frame or an image at a lower layer in a same frame as a reference.

S404: Before the fourth frame is encoded, although all the users receive a second layer in the third frame, because the third frame is not a candidate reference frame, a reconstructed image at the second layer in the third frame is not stored and cannot be updated to the long-term buffer, and cannot be used as a long-term reference frame. The fourth frame is still encoded by using the SVC reference relationship, and by using the previous frame of image at the same layer of the image in the current frame or the image at the lower layer in the same frame as the reference.

S405: Before a fifth frame is encoded, a feedback signal indicating that the plurality of user receivers successfully receive an image in the fourth frame is received, and all the users receive a second layer. In addition, because the image in the fourth frame is a candidate of a long-term reference frame, reconstructed images at all layers in the fourth frame have been stored. In this case, a received best-quality layer in the fourth frame may be updated to the long-term reference frame in the long-term buffer based on the feedback signal. For example, if the highest-quality layer that is in the fourth frame and that is received by all the users is the second layer a reconstructed image at the second layer in the fourth frame is updated to the long-term reference frame.

S406: When the fifth frame is encoded, during encoding at a basic layer, the second layer in the fourth frame is used as a first reference, and a basic layer in a previous frame is used as a second reference. At the same time, the second layer in the fourth frame is written into the video information as a signal of the long-term reference frame, and is transmitted to a decoder at each receiver in the plurality of user receivers.

S407: When a sixth frame is encoded, because receivers of some users do not receive any layer of image, the long-term reference frame is not updated. For a basic layer in the sixth frame, the second layer in the fourth frame is still used as a first reference, and the basic layer in the previous frame is used as a second reference.

S408: Before a seventh frame is encoded, a received feedback signal indicates that the receiver fails to perform receiving, and image troubleshooting needs to be performed. In this case, when encoding at a basic layer in the seventh frame is performed, only a latest determined long-term reference frame like the second layer in the fourth frame is used as a reference for inter coding, to reduce a bit rate and improve a transmission success rate.

S409: Before an eighth frame is encoded, a received feedback signal indicates that an image in the seventh frame is successfully received, and all users in the plurality of user receivers receive a third layer in the seventh frame. In addition, because the seventh frame is the candidate of the long-term reference frame, reconstructed images at all layers in the seventh frame have been stored in the buffer. In this case, a best-quality layer received by all the users may be updated to the long-term buffer based on the feedback signal as the long-term reference frame. For example, a reconstructed image at the best-quality third layer in the seventh frame is updated to the buffer as the long-term reference frame.

S410: When encoding at a basic layer in the eighth frame is performed, the third layer in the seventh frame is used as a first reference, and a basic layer in a previous frame is used as a second reference. At the same time, the third layer in the seventh frame is written into the video information as location information of the long-term reference frame, and is transmitted to decoders at the plurality of user receivers.

S411: An image in a subsequent frame is encoded by analogy.

In the video encoding/decoding method for projection image transmission provided in Embodiment 2 of this application, in the one-to-many short-range wireless projection scenario, because the long-term reference frame comes from the higher-quality layer, coding efficiency and reconstructed image quality of the basic layer can be improved in the solution of the present invention. During image troubleshooting, the bit rate may be reduced through inter coding in Embodiment 2 of this application, thereby improving the transmission success rate and reconstructed image quality.

### Embodiment 3

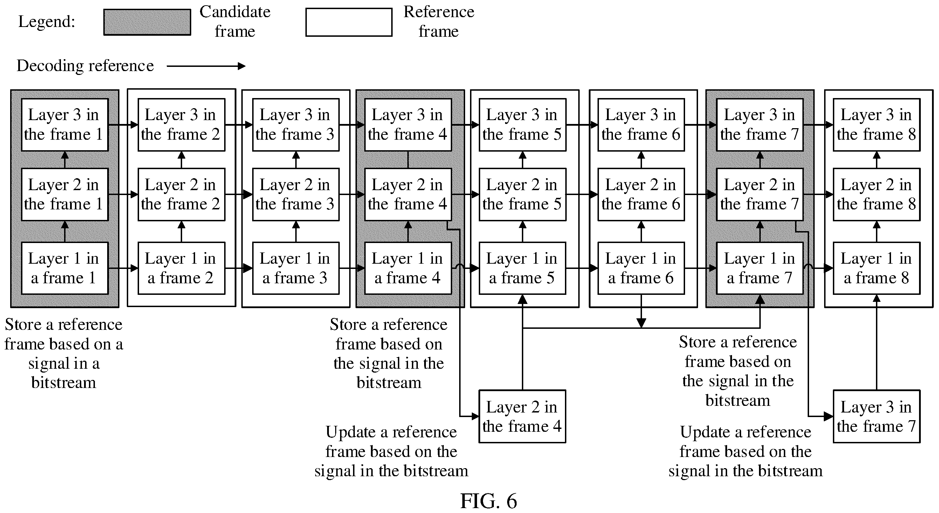

FIG. 6 is a diagram of a video decoding method applied to a receiver decoding scenario according to Embodiment 3 of this application. Based on a layered encoding/decoding standard in standards such as HEVC and AVC, a reference image is used and updated in a decoding process. As shown in FIG. 6, the following steps are included.

S501: A candidate buffer is reserved based on a signal indicating a quantity of candidates of long-term reference frames in received video information. As shown in FIG. 6, a buffer is reserved for three image layers in each candidate buffer.

S502: The candidates of the long-term reference frames are stored based on location information of the candidates of the long-term reference frames in the video information. As shown in FIG. 6, gray indicates the candidates of the long-term reference frames marked by an encoder. During decoding, reconstructed images, at a decoder side, of the candidates of the long-term reference frames may be stored in the reserved candidate buffer.

S503: When there is no data in the long-term reference frame in the long-term buffer, a common SVC encoding/decoding reference relationship is used for decoding. For example, a first frame to a fourth frame in FIG. 6 each are decoded with reference to a previous frame of image at a same layer of an image in a current frame or an image at a lower layer in a same frame.

S504: When header information of a fifth frame is decoded, a signal indicating that the long-term reference frame is updated is obtained. In this case, a candidate of a corresponding long-term reference frame is updated to the long-term buffer based on the signal indicating that the long-term reference frame is updated. As shown in FIG. 6, the signal indicates to update a second layer in a fourth frame, and an image at the second layer in the fourth frame is used as the long-term reference frame.

S505: When decoding at a basic layer in the fifth frame is performed, the long-term reference frame is used as the long-term reference frame, for example, the second layer in the fourth frame in FIG. 6, and a basic layer in a previous frame is still used as a second reference image.

S506: When decoding at a basic layer in a sixth frame is performed, because a signal indicating that the long-term reference frame is updated is not obtained, the long-term reference frame is not updated. When decoding at the basic layer in the sixth frame is performed, the second layer in the fourth frame is still used as the long-term reference frame.

S507: When decoding at a basic layer in a seventh frame is performed, image troubleshooting needs to be performed due to a receiving failure. In this case, when decoding at the basic layer in the seventh frame is performed, only the long-term reference frame is used as a reference, and inter decoding is performed in a P-frame mode.

S508: When information about an eighth frame is decoded, a signal indicating that the long-term reference frame is updated is obtained, and a candidate of a corresponding long-term reference frame is updated to the long-term buffer based on the signal. As shown in FIG. 6, a third layer in the seventh frame is updated, and a reconstructed image at the third layer in the seventh frame is updated to the long-term buffer.

S509: When decoding at a basic layer in the eighth frame is performed, the long-term reference frame is used as a first reference, for example, the reconstructed image at the third layer in the seventh frame shown in FIG. 6, and a basic layer in a previous frame is used as a second reference.

S510: An image in a subsequent frame is encoded by analogy.

According to the video encoding/decoding method for projection image transmission provided in Embodiment 3 of this application, during decoding, the receiver performs corresponding processing via the encoder at a transmitter, to achieve encoding/decoding consistency. A decoder needs to obtain the quantity of candidate reference frames from the video information and allocate storage space. The decoder further needs to obtain the location information of the candidate reference frame from the video information and store the corresponding image.

### Embodiment 4

According to a video encoding method provided in Embodiment 4 of this application, a quantity and locations of candidates of long-term reference frames are marked.

S601: During encoding, a transmitter adds information about the quantity of candidates of long-term reference frames to a sequence parameter set sequence_parameter_set () of video information.

As shown in Table 1, the information about the quantity of candidates of long-term reference frames is added to the sequence parameter set through Multi_layer_longterm_reference_candidate number (). The Multi_layer_longterm_reference_candidate_number () may be denoted as a first sequence parameter, and is used to mark the quantity of candidates of the plurality of long-term reference frames. ue(v) refers to variable-length coding, and the quantity of candidates of the plurality of long-term reference frames may also be marked in another manner, for example, a fixed-length coding function.

**Table 1**

| | |
|---|---|
| seq_parameter_set_rbsp( ) { | Descriptor |
| Multi_layer_longterm_reference_candidate_number} | ue(v) |

S602: During encoding, the transmitter adds location information of the candidates of the long-term reference frames to a sequence parameter set sequence_parameter_set (). As shown in Table 2, a sequence-level mark is added to the sequence parameter set through Multi_layer_longterm_reference_candidate_interval (). The Multi_layer _longterm_reference_candidate_interval () may be denoted as a second sequence parameter. The second sequence parameter is used to mark a quantity of interval frames between the candidates of the plurality of long-term reference frames, to determine candidate location information of each long-term reference frame in the candidates of the plurality of long-term reference frames. For example, in Embodiment 1, a value of the interval ue(v) is 3.

**Table 2**

| | |
|---|---|
| seq_parameter_set_rbsp( ) { | Descriptor |
| Multi_layer_longterm_reference_candidate_interval} | ue(v) |

S603: During encoding, the transmitter may add a mark to frame header information slice_segment_header. As shown in Table 3, the mark is added in the frame header information through Multi_layer _longterm_reference_candidate_flag (), where u(1) indicate a one-bit signal. Multi_layer _longterm_reference_candidate_flag () may be denoted as a third function, and is used to mark whether a slice (Slice) image corresponding to current slice (Slice) header information is used as the candidate of the long-term reference frame.

**Table 3**

| | |
|---|---|
| slice_segment_header( ) { | Descriptor |
| Multi_layer_longterm_reference_candidate_flag} | u(1) |

In Embodiment 4 of this application, the quantity and the locations of candidates of the long-term reference frames are marked, to ensure that a decoder can use a long-term reference frame consistent with that of an encoder.

### Embodiment 5

According to a video encoding method provided in Embodiment 5 of this application, during multi-slice encoding, a position of a long-term reference frame is marked.

S701: A quantity of referred slices, and frame information and layer information of each slice (Slice) are marked in an image parameter set, as shown in Table 4.

**Table 4**

| | |
|---|---|
| pic_parameter_set_rbsp( ) { | Descriptor |
| | |
| Multi_layer_longterm_reference_slice_number | ue(v) |
| for (i=0; i<Multi_layer_longterm_reference_slice_number; i++){ | |
| Multi_layer_longterm_reference_slice_POC[i] | ue(v) |
| Multi_layer_longterm_reference_slice_layer[i] } | ue(v) |

Multi_layer_longterm_reference_slice_number () is used to mark a quantity of slices of the referred long-term reference frame, Multi_layer_longterm_reference_slice_POC[i] indicates a POC value of a frame in which each slice added to the long-term reference frame is located, and Multi_layer__longterm_reference_slice_layer[i] indicates a layer number of each slice added to the long-term reference frame.

In Embodiment 5 of this application, a source location of each slice of the long-term reference frame is marked, to ensure that a decoder can use a long-term reference frame consistent with that of an encoder.

In embodiments of this application, when there is the channel feedback but the feedback is delayed, the long-term reference frame is established and updated. The long-term reference frame is used as the additional reference frame for use during encoding at the basic layer in layered encoding. The candidate reference frame is stored to reduce the quantity of images that need to be stored before the feedback information is obtained. The final long-term reference frame is selected from the stored candidate reference frames based on the feedback signal. When image troubleshooting is required, encoding at the basic layer only refers to the long-term reference frame and is performed in the P-frame mode instead of the common I-frame mode.

In embodiments of this application, because the long-term reference frame comes from the higher-quality layer, coding efficiency and reconstructed image quality of the basic layer can be improved. During image troubleshooting, a bit rate may be reduced through inter coding in embodiments of this application, thereby improving a transmission success rate and reconstructed image quality.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any regular processor, or the like.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A video encoding method, wherein the method comprises:
encoding video information, wherein the video information comprises M frames, the M frames comprise a first frame, a second frame, and a third frame, the second frame refers to the first frame, and the third frame refers to the second frame or the first frame;
storing the first frame, the second frame, and the third frame in a buffer to obtain candidates of a plurality of long-term reference frames; and
selecting a subset from the candidates of the plurality of long-term reference frames as a long-term reference frame for use.

2. The method according to claim 1, wherein the determining to select a subset from the candidates of the plurality of long-term reference frames as a long-term reference frame for use comprises:
determining, based on a feedback signal, to select one or a combination of the first frame, the second frame, and the third frame from the candidates of the plurality of long-term reference frames as the long-term reference frame for use, wherein the feedback signal is a signal indicating whether a receiver successfully performs receiving.

3. The method according to claim 1 or 2, wherein for layered encoding on the video information, the determining to select a subset from the candidates of the plurality of long-term reference frames as a long-term reference frame for use comprises:
selecting a layer from the long-term reference frames as the long-term reference frame for use.

4. The method according to any one of claims 1 to 3, wherein each of the M frames comprises a basic layer and an enhancement layer, and encoding at the basic layer in each frame refers to an enhancement layer in the long-term reference frame.

5. The method according to any one of claims 1 to 4, wherein each of the M frames comprises the basic layer and the enhancement layer, and encoding at the enhancement layer in each frame refers to a lower layer in the same frame and a same layer in a previous frame.

6. The method according to any one of claims 1 to 5, wherein the method further comprises:
adding a first mark to the video information, wherein the first mark indicates frame information and/or layer information of the candidates of the plurality of long-term reference frames.

7. The method according to any one of claims 1 to 5, wherein the method further comprises:
adding a second mark to the video information, wherein the second mark indicates frame information and/or layer information of the long-term reference frame.

8. The method according to any one of claims 1 to 7, wherein a frame delay of the feedback signal is at least M frames.

9. The method according to any one of claims 1 to 7, wherein the feedback signal comprises candidate information of a long-term reference frame that is successfully received; and the method further comprises:
determining/updating the long-term reference frame based on the candidate information of the long-term reference frame that is successfully received.

10. The method according to claim 8 or 9, wherein there are a plurality of feedback signals; and the method further comprises:
determining, based on candidate information that is of long-term reference frames that are successfully received and that is in the plurality of feedback signals, candidate information of long-term reference frames that are successfully received on a plurality of channels; and
determining/updating the long-term reference frame based on the candidate information of the long-term reference frames that are successfully received on the plurality of channels.

11. The method according to any one of claims 1 to 8, wherein a latest determined long-term reference frame is used based on the feedback signal.

12. The method according to claim 1, wherein the method further comprises:
determining, according to a pre-agreed rule, to select the subset from the candidates of the plurality of long-term reference frames as the long-term reference frame for use.

13. The method according to any one of claims 1 to 12, wherein the storing the first frame, the second frame, and the third frame in a buffer to obtain candidates of a plurality of long-term reference frames comprises:
storing frame quantities of the first frame, the second frame, and the third frame and location information of the frames in the buffer, wherein the location information comprises frame information and/or layer information of the first frame, the second frame, and/or the third frame.

14. A video decoding method, wherein the method comprises:
decoding video information, wherein the video information comprises M frames, the M frames comprise a first frame, a second frame, and a third frame, the second frame refers to the first frame, and the third frame refers to the second frame or the first frame;
storing the first frame, the second frame, and the third frame in a buffer to obtain candidates of a plurality of long-term reference frames; and
selecting a subset from the candidates of the plurality of long-term reference frames as a long-term reference frame for use.

15. The method according to claim 14, wherein the determining to select a subset from the candidates of the plurality of long-term reference frames as a long-term reference frame for use comprises:
determining to select one or a combination of the first frame, the second frame, and the third frame from the candidates of the plurality of long-term reference frames as the long-term reference frame for use.

16. The method according to claim 14 or 15, wherein for layered decoding on the video information, the determining to select a subset from the candidates of the plurality of long-term reference frames as a long-term reference frame for use comprises:
selecting any layer from the long-term reference frames for use.

17. The method according to any one of claims 14 to 16, wherein each of the M frames comprises a basic layer and an enhancement layer, and decoding at the basic layer in each frame refers to an enhancement layer in the long-term reference frame.

18. The method according to any one of claims 14 to 17, wherein each of the M frames comprises the basic layer and the enhancement layer, and decoding at the enhancement layer in each frame refers to a lower layer in the same frame and a same layer in a previous frame.

19. The method according to any one of claims 14 to 18, wherein the method further comprises:
obtaining frame information and/or layer information of the candidates of the plurality of long-term reference frames based on a first mark in the video information, wherein
the frame information and/or the layer information of the candidates of the plurality of long-term reference frames comprise/comprises frame information and/or layer information of the first frame, the second frame, and the third frame; and
obtaining the long-term reference frame from a video bitstream based on the frame information and/or the layer information of the candidates of the plurality of long-term reference frames.

20. The method according to any one of claims 14 to 19, wherein the method further comprises:
obtaining frame information and/or layer information of the long-term reference frame based on a second mark in the video information; and
obtaining the long-term reference frame from the candidates of the plurality of long-term reference frames based on the frame information and/or the layer information of the long-term reference frame.

21. The method according to any one of claims 14 to 20, wherein the method further comprises: obtaining candidate information that is of a long-term reference frame that is successfully received and that is in the video information; and
determining/updating the long-term reference frame based on the candidate information of the long-term reference frame that is successfully received.

22. The method according to claim 20 or 21, the method further comprises: sending a feedback signal, wherein the feedback signal is a signal indicating that a receiver performs successfully receiving, and the feedback signal comprises the frame information and/or the layer information of the candidates of the plurality of long-term reference frames.

23. The method according to claim 20 or 21, wherein the method further comprises: sending a feedback signal, wherein the feedback signal is a signal indicating that a receiver performs successfully receiving, and the feedback signal comprises the frame information and/or the layer information of the long-term reference frame.

24. The method according to any one of claims 14 to 21, wherein the method further comprises:
performing decoding by using a latest determined long-term reference frame; and
sending a feedback signal, wherein the feedback signal is a signal indicating that a receiver fails to perform receiving, or a signal indicating that a candidate of a non-long-term reference frame is received.

25. The method according to claim 14, wherein the method further comprises:
determining, according to a pre-agreed rule, to select the subset from the candidates of the plurality of long-term reference frames as the long-term reference frame for use.

26. The method according to any one of claims 14 to 25, wherein the storing the first frame, the second frame, and the third frame in a buffer to obtain candidates of a plurality of long-term reference frames comprises:
storing frame quantities of the first frame, the second frame, and the third frame and location information of the frames in the buffer, wherein the location information comprises frame information and/or layer information of the first frame, the second frame, and the third frame.

27. A video encoding apparatus, configured to perform the method according to any one of claims 1 to 13, wherein the apparatus comprises:
an encoding module, configured to encode video information, wherein the video information comprises M frames, the M frames comprise a first frame, a second frame, and a third frame, the second frame refers to the first frame, and the third frame refers to the second frame or the first frame;
a buffer module, configured to store the first frame, the second frame, and the third frame in a buffer to obtain candidates of a plurality of long-term reference frames; and
a long-term reference frame determining module, configured to select a subset from the candidates of the plurality of long-term reference frames based on a feedback signal as a long-term reference frame for use.

28. A video decoding apparatus, configured to perform the method according to any one of claims 14 to 26, wherein the apparatus comprises:
a decoding module, configured to decode video information, wherein the video information comprises M frames, the M frames comprise a first frame, a second frame, and a third frame, the second frame refers to the first frame, and the third frame refers to the second frame or the first frame;
a buffer module, configured to store the first frame, the second frame, and the third frame in a buffer to obtain candidates of a plurality of long-term reference frames; and
a long-term reference frame determining module, configured to select, a subset from the candidates of the plurality of long-term reference frames based on a feedback signal as a long-term reference frame for use.

29. A video encoding/decoding system, comprising the encoding apparatus according to claim 27 and the decoding apparatus according to claim 28, wherein the encoding apparatus performs the method according to any one of claims 1 to 13 when running, and the decoding apparatus performs the method according to any one of claims 14 to 26 when running, to implement long-range projection transmission of video information.
